# EUROPEAN PATENT APPLICATION

(11) **EP 2 506 641 A1**
(43) Date of publication of application: **03.10.2012**
(21) Application number: 10791198.4
(22) Date of filing: 30.03.2010
(51) Int. Cl.: H04W 64/00

(54) **METHOD, SYSTEM AND DEVICE FOR LOCATION**

(30) Priority: 26.11.2009 CN 200910246210
(71) Applicant: ZTE Corporation, Shenzhen, Guangdong 518057 (CN)
(72) Inventor: YE, Jianyang, Shenzhen Guangdong 518057 (CN); SHAN, Liang, Shenzhen Guangdong 518057 (CN); DING, Zhen, Shenzhen Guangdong 518057 (CN); YANG, Kui, Shenzhen Guangdong 518057 (CN); LI, Hui, Shenzhen Guangdong 518057 (CN)
(74) Representative: Modiano, Micaela Nadia
(86) International application number: PCT/CN2010/071433
(87) International publication number: WO 2010/148692

(57) **Abstract**

This disclosure claims a method, system and device for location. In the method, for a location type sent initially from a network, before sending a Secure User Plane Location (SUPL) initial location message, a location platform obtains routing information of a SET to be located, and then sends, according to the routing information, a signalling carrying the SUPL initial location message to a Mobile Switch Center (MSC) to which the SET currently belongs. The MSC sends the SUPL initial location message to the SET. According to this disclosure, a client can timely and accurately obtain the location information of the SET to be located, and user experience is improved.

## Description

### Field of the Invention

This disclosure relates to the field of communication, and in particular to a method, system and device for location.

### Background of the Invention

Location Based Service (LBS) is also called a mobile location service or a location service. The main contents of this service include: interacting between a mobile location centre and some entities in a mobile communication network; obtaining necessary measurement data of a mobile terminal through a wireless location technology or an auxiliary Global Position System (GPS) positioning technology; calculating geographical position information (such as estimation of longitude and latitude coordinates) of the entity through a location; and providing corresponding calling or non-calling services and information services based on the location of the mobile terminal.

Specifically, according to different bearing layers of message in a location flow, and the location technology can be divided into a User-Plane location and a Control-Plane location, wherein the location technology of the User-Plane is mainly to realize transmission of a message flow through IP connection (such as all-IP connection) of a Packet-Switching (PS) domain; and the location technology of the Control-Plane is mainly to realize transmission of a message flow through a signalling layer of a Circuit-Switching (CS) domain.

The location method frequently used based on the user plane mainly comprises an Assisted GPS (AGPS) of a Secure User Plane Location (SUPL) provided by the Open Mobile Alliance (OMA), and a gpsOne location technology provided by the Qualcomm Company.

The location method frequently used based on the control plane comprises, in a 3GPP network: anyTimeInterrogation (ATI), provideSubscriberLocation (PSL) signalling and provideSubscriberInformation (PSI), and in a 3GPP2 network: an Advanced Forward Link Trilateration (AFLT), Enhanced Forward Link Trilateration (EFLT) and the like.

At present, as to the SUPL AGPS, the location methods based on the User Plane, when a third party at the network side initiates a Network Initiated (NI) request, the user plane sends a SUPL INIT message to trigger a mobile phone to start the SUPL.

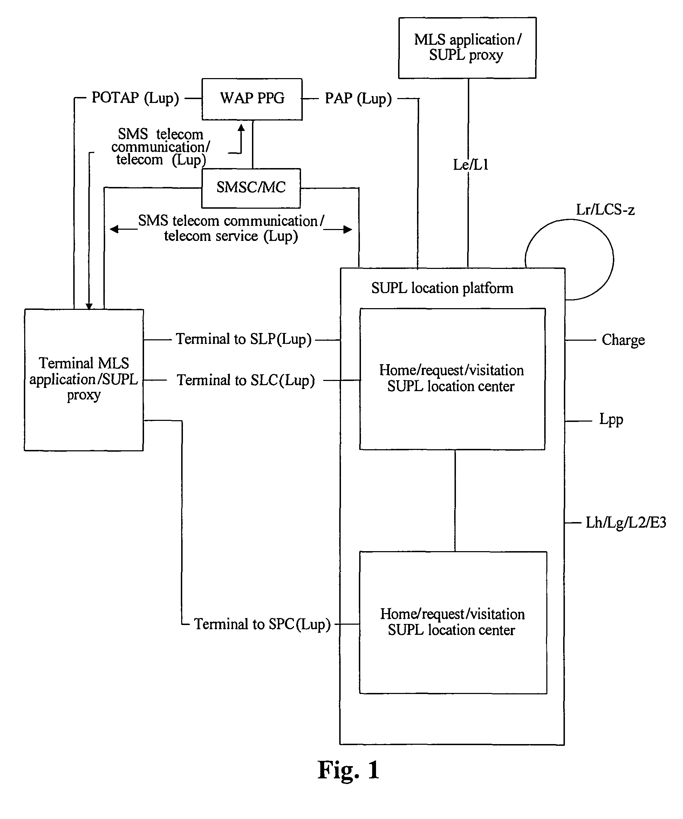

Specifically, Fig. 1 is a structural diagram of pure user plane service location protocol network described in OMA standard. According to the description in the OMA standard, the method for sending the SUPL INIT message by the SUPL AGPS can comprise two types as follows:
the first one, a SUPL Location Platform (SLP) sends WAP PUSH to a terminal SUPL Enabled Terminal (SET) through a Push Proxy Gateway (PPG) of a Wireless Application Protocol (WAP); and a Push Access Protocol (PAP) protocol is adopted between the SLP and the WAP PPG; and
the second one, the SLP sends a Mobile Terminated Short Message Service (MT SMS) to a terminal (SET) through a Short Message Service Center (SMSC); and a Short Message Peer to Peer (SMPP) protocol is adopted between the SLP and the SMSC.

In the above two methods for sending the SUPL INIT message, as neither the WAP PPG nor the SMSC can send the SUPL INIT message in real time, they must be transmissioned in queue as other common messages. Thus, in many cases the SET receives the SUPL INIT message only after the SLP has waited for the SET connection overtime. In such a case, if the SET retries to establish a link with the SLP, it will fail, and, it also causes extra network connection burden, which can easily arouse complaints of users. Furthermore, through the two user plane sending methods, the SLP can only passively wait for the connection to be overtime rather than know whether the state of the SET is normal. If the SUPL INIT message is sent just in the case of abnormal terminal state (such as power-off, roaming, out of service, roaming out of the service area and the like), a waste of the system resource will be caused. In addition, as the number of the terminals which support the SUPL currently is limited, most terminals do not have SUPL capability. As a result, a further location for the terminal cannot be performed, but only the failure process can be performed.

According to above description, in the related art not only the SUPL INIT message cannot be sent in real time, but a necessary judgment for the SET state cannot be performed before the SUPL INIT message is sent out either. As a result, it will cause problems, such as high location failure rate, system and network resource waste and the like. For these above problems, an effective solution has not been proposed at present.

### Summary of the Invention

Aiming at the problems in the prior art that the SUPL INIT message cannot be sent in real time and a necessary judgment for the SET state cannot be performed before the SUPL INIT message is sent out, which causes high location failure rate, and system and network resource waste, this disclosure is proposed. Thus, the disclosure provides an improved location solution to solve at least one of the above problems.

According one aspect of this disclosure, a location method is first provided.

The location method according to this disclosure comprises: for a location type sent initially from a network, before sending an SUPL initial location message, a location platform obtaining routing information of a terminal to be located, and then sending, according to the routing information, a signalling carrying the SUPL initial location message to a Mobile Switch Center (MSC) to which the terminal currently belongs; and the MSC sending the SUPL initial location message to the terminal.

Furthermore, before the location platform sending the signalling carrying the SUPL initial location message to the MSC, the location method further comprises: the location platform obtaining state information for indicating a current state of the terminal, wherein the current state of the terminal comprises one of: normal, power-off, out of service, and roaming out of the service area.

Furthermore, before the location platform sending the signalling carrying the SUPL initial location message to an MSC, the location method further comprises: the location platform determining that the terminal is currently in the normal state according to the obtained state information.

Furthermore, if the location platform determines that the terminal is currently not in the normal state according to the obtained state information, the location method further comprises: the location platform forbidding sending the signalling to the MSC, ending the location process of the terminal, and returning a message for indicating location failure to a client.

Furthermore, after the MSC sending the SUPL initial location message to the terminal, the method further comprises: the terminal establishing a connection with the location platform; if the connection establishment is successful, the location platform interacting with the terminal to perform location and calculation of auxiliary GPS; and if the location and calculation of the auxiliary GPS is successful, the location platform obtaining location information of the terminal; and if the terminal is failed in establishing the connection with the location platform or failed in performing the location and calculation of the auxiliary GPS, the location platform sending another signalling to the MSC and receiving response message returned from the MSC, and obtaining the location information of the terminal according to the response message, wherein the another signalling comprises a ProvideSubscriberLocation (PSL) signalling or a provideSubscriberInformation (PSI) signalling.

Furthermore, if sending the signalling carrying the SUPL initial location message is failed, the method further comprises: the location platform sending another signalling to the MSC, wherein the signalling comprises: PSL signalling or PSI signalling; and the location platform receiving the response message returned from the mobile switch centre and obtaining the location information of the terminal according to the response message.

According to the other aspect of this disclosure, a location system is also provided.

The location system according to this disclosure comprises an SLP and a MSC, wherein the SLP comprises an obtaining module, a first sending module and a locating module; the obtaining module is configured for obtaining routing information of a terminal to be located; the first sending module is configured for sending a signalling carrying a SUPL initial location message to the MSC to which the terminal currently belongs according to the routing information; and the locating module is configured for performing auxiliary GPS location on the terminal and obtaining the location information of the terminal.

The MSC is configured for sending the SUPL initial location message to the terminal according to the received signalling carrying the SUPL initial location message so as to activate the terminal to establish a connection with the SLP.

Furthermore, the SLP may further comprises a second sending module and a receiving module, wherein the second ending module is configured for sending another signalling to the MSC when sending the signalling carrying with the SUPL initial location message is failed, the terminal is failed in establishing the connection with the SLP, or the locating module and the terminal are failed in performing the auxiliary GPS location; the another signalling comprises a PSL signalling or a PSI signalling; the receiving module is configured for receiving the response message returned from the MSC; and the response message carries the location information of the terminal or the information of a cell where the terminal exists.

According to another aspect of this disclosure, a location device is further provided.

The location device according to this disclosure comprises an obtaining module, a first sending module and a locating module, wherein the obtaining module is configured for obtaining routing information of the terminal to be located; the first sending module is configured for sending a signalling carrying the SUPL initial location message to the MSC to which the terminal currently belongs according to the routing information; and the locating module is configured for performing auxiliary GPS location on the terminal and obtaining the location information of the terminal.

Furthermore, the location device further comprises a second sending module and a receiving module, wherein the second sending module is configured for sending another signalling to the MSC; the another signalling comprises a PSL signalling or a PSI signalling; the receiving module is configured for receiving response message of the another signalling returned from the MSC; and the response message carries the location information of the terminal or the information of the cell where the terminal exists.

Furthermore, the location module may comprise a first judging unit, an auxiliary GPS locating unit and a second judging unit, wherein the first judging unit is configured for judging if the terminal is successful in establishing a connection with the location platform; if yes, triggering the auxiliary GPS locating unit and otherwise, triggering the second sending module; the auxiliary GPS locating unit is configured for performing the message interaction based on the user plane with the terminal and performing the auxiliary GPS location on the terminal so as to obtain the location information of the terminal; and the second judging unit is configured for judging if the auxiliary GPS locating unit is failed in performing the auxiliary GPS location, and if yes, triggering the second sending module.

Furthermore, the location device may further comprise a judging module configured for judging if the signalling carrying the SUPL initial location message is sent successfully; if yes, triggering the locating module, and otherwise, triggering the second sending module.

Through this disclosure, before sending the SUPL INIT, the SLP first obtains the routing information of the SET to be located, and then sends the signalling carrying the SUPL INIT message to the MSC of the SET according to the routing information to locate the SET. Thus, it guarantees timeliness and controllability of the sending of the SUPL INIT message. and reduces the waiting time of the sending of the information, and improves the success rate of the location. It enables the client to obtain the location information of the SET to be located timely and accurately, reduces the waste of system and network resources and improves the user experience.

The other characteristics and advantages of this disclosure are described in the following specification. A part of this disclosure is obvious in the specification or is understood through the implementation of this disclosure. The purpose and other advantages of this disclosure can be realized and obtained through the written specification, claims and structures particularly appointed in drawings.

### Brief Description of the Drawings

The drawings illustrated herein are provided for further understanding of this disclosure and constitute a portion of the application. The schematic embodiments and illustration of this disclosure are used for explaining this disclosure, and do not constitute inappropriate limitation to this disclosure. In the drawings:
Fig. 1 shows a network structural diagram for describing a pure user plane service location protocol according to the OMA standard;
Fig. 2 shows a flowchart of a location method according to an embodiment of this disclosure;
Fig. 3 shows a flowchart of the first embodiment;
Fig. 4 shows a flowchart of the second embodiment;
Fig. 5 shows a flowchart of the third embodiment in the 3GPP network;
Fig. 6 shows a flowchart of the third embodiment in the 3GPP2 network;
Fig. 7 shows a structural diagram of a location system according to an embodiment of this disclosure;
Fig. 8 shows a structural diagram of a location system according to a preferred embodiment of this disclosure;
Fig. 9 shows a structural diagram of a location device according to an embodiment of this disclosure;
Fig. 10 shows a structural diagram of a location device according to the first preferred embodiment of this disclosure; and
Fig. 11 shows a structural diagram of a location device according to the second preferred embodiment of this disclosure.

### Detailed Description of the Embodiments

In case of no conflict, the embodiments in the application and characteristics in the embodiments can be combined mutually.

The preferred embodiments of this disclosure are illustrated hereinafter in combination with the drawings. It should be understood that the preferred embodiments described here are only for illustrating and explaining this disclosure, but not for limiting this disclosure.

It needs to be noted that the SUPL Enabled Terminal (SET) mentioned in the embodiments of this disclosure includes, but not limited to: User Equipment (UE) in a Universal Mobile Telecommunications System (UMTS), a Mobile Station (MS) in a Global System for Mobile Communication (GSM) system, a MS in a Code Division Multiple Access (CDMA) or a Personal Computer (PC) based on IP transmission.

According to an embodiment of this disclosure, a location method is first provided.

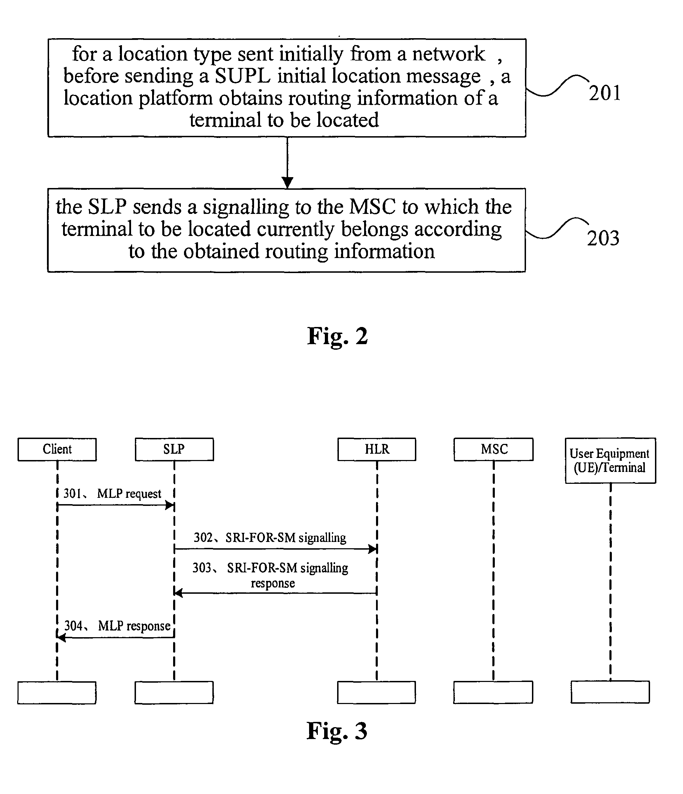

The Fig. 2 shows a flowchart of a location method provided according to an embodiment of this disclosure. As shown in the Fig. 2, the location method provided by the embodiment of this disclosure mainly comprises the following steps (Step 201-Step 203)..

Step 201, for a location type sent initially from a network, before sending a SUPL initial location message, a location platform obtains routing information of a SET to be located.

In the embodiment of this disclosure, the location type sent initially from a network means the location initiated by a third party at the network side. In the specific implement process, the SLP can determine that it is necessary to send the SUPL initial location (SUP INIT) message and trigger Step 201 when a location request sent by the client is received, wherein the location request carries an identification of the SET to be located.

In the specific implementation process, the SLP can send an inquiry signalling to a Home Location Register (HLR) (or Home Subscriber Server (HSS)) of the SET to be located to obtain the routing information of the SET.

Step 203, the SLP sends a signalling to the MSC to which the SET to be located currently belongs according to the obtained routing information, wherein the signalling carries the SUPL initial location message, so that the MSC sends the SUPL initial location message to the SET and activates the SET to establish a connection with the SLP.

In specific application, the MSC can be the MSC or the Visitor Location Register (VLR).

In the specific application, in order to avoid sending the SUPL INIT message to the SET which is in the abnormal state, the SLP can first obtain the current state of the SET and determine whether to send the SUPL INIT message according to the current state of the SET. Therefore, before the SLP sends the signalling carrying the SUPL INIT message to the MSC, the SLP can obtain state information for indicating the current state of the SET through the HLR (or HSS), wherein the current state of the SET can be any one of: normal, power-off, out of service, or roaming out of the service area.

When the SET is currently in the abnormal state (comprises: power-off, out of service or roaming out of the service area), the SLP can only passively wait for the SET connection to be overtime. Thus, in order to avoid the meaningless wait of the SLP in such case, in the embodiment of this disclosure, if the SLP determines that the current state of the SET is the abnormal state according to the state information returned based on the HLR (or HSS), the SLP forbids sending the signalling carrying the SUPL INIT message to the MSC, ends the location process of the SET and returns the information for indicating location failure of the SET to the client. Only if the current state of the SET to be located is the normal state, the SLP sends the signalling to the MSC.

After the MSC receives the signalling, the MSC sends the SUPL INIT message to the SET. After receiving the SUPL INIT message, the SET sends a message to the SLP and establishes a connection with the SLP if the location is allowed; and if the SET is successful in establishing a connection with the SLP, the location platform interacts with the SET, performs location and calculation of the auxiliary GPS (AGPS) and obtains the location information of the SET. After receiving the location information of the SET, the SLP returns the location information of the SET to the client which initiates the location request.

Specifically, if sending the signalling carrying the SUPL INIT message is failed, the SLP is failed in connecting with the SET, or the location and calculation of the auxiliary GPS is failed, the SET location is performed by adopting the following control plane location mode: in the 3GPP network, the SLP sends a PSL signalling or a PSI signalling to the Mobile Switch Center (MSC); and in the 3GPP2 network, the SLP sends an ISPOSREQ signalling to the MSC; and after receiving the signalling, the MSC returns corresponding response message to the SLP; and the SLP can obtain the location information of the SET according to the received response message.

Specifically, the SLP in the 3GPP network can select the PSUPSI signalling sent to the MSC to perform the location of the Serving Mobile Location Center (SMLC) or the location of the CELL ID. If the SMLC location is performed, the response message returned from the MSC to the SLP carries the location information of the SET. If the CELL ID location is performed, the response message returned from the MSC to the SLP carries the CELL ID where the SET currently exists. The SLP inquires a base station database according to the CELL ID so as to obtain the location information of the SET. Similarly, the SLP in the 3GPP2 network can select to send the ISPOSREQ to the MSC to perform the AFLT/EFLT LOCATION or CELL ID location. If the AFLT/EFLT location is performed, the SLP performs the triangular calculation to obtain the location according to the pilot intensity information (PSMM) and code chip time delay in the ISPOSREQ response. If the CELL ID location is performed, the SLP inquires the base station database according to the CELL ID returned from the MSC to obtain the location information.

In the specific application, a receipt can be sent to the SLP through a core network to notify the SLP in time whether the SET has received the SUPL INIT message, or whether the SET refuses the location. Therefore, the SLP can take corresponding measures in time to reduce unnecessary network connection burden of user. In the specific application, the signalling of the receipt returned by the core network can be combined with the privacy authentication of the user.

The location method provided by this disclosure is described in detail with reference to the specific embodiments. For illustration, the following embodiments take that the SLP obtains the routing information and the state information of the SET through the HLR as an example.

### Embodiment 1

The embodiment describes a process of the location method according to this disclosure in a case of knowing that the current state of the SET is abnormal.

Preferably in the embodiment, in the 3GPP network the location platform can select the SEND-ROUTING-INFO-FOR-SM (SRI-FOR-SM) signalling to inquire the routing information of the SET from the HLR, and the location platform can select the Short-Message-Service-Request (SMSREQ) signalling in the 3GPP2 network to do the same. For the purpose of simplicity in illustration, the process below is described by only taking the 3GPP network as an example.

Fig. 3 shows a flowchart of the embodiment. As shown in the Fig. 3, when the current state of the SET to be located is abnormal, the process for locating the SET mainly comprises the following steps (Step 301-Step 304).

Step 301, a Location Service Client (LCS) sends a Mobile Location Protocol (MLP) request to the SUPL location platform and requests for performing the SUPL AGPS location on the SET to be located.

Step 302, the SUPL location platform sends an SRI-FOR-SM signalling to the HLR to which the SET to be located belongs.

Specifically, the SRI-FOR-SM signalling is used for inquiring the routing information of the SET to be located and inquiring the current state of the SET.

Step 303, the HLR returns the routing information of the SET to be located in the SRI-FOR-SM signalling response message and indicates the current state information of the SET.

Specifically, the current state of the SET to be located can be any one of: power-off, out of service or roaming out of the service area.

Step 304, the SUPL location platform judges that it cannot perform location because of the current state of the SET to be located, carries out a location failure response for the MLP request and ends the process.

Specifically, when the current state of the SET to be located is any one of power-off, out of service or roaming out of the service area, the SUPL AGPS and control plane location method are unsuitable and cannot locate the SET to be located. Consequently, the process is ended to avoid the meaningless wait in case of the pure user plane.

By adopting the embodiment, the processing method for the SET which is currently in the abnormal state can effectively control the sending of the SUPL INIT message.

### Embodiment 2

The embodiment describes the process of the location method according to this disclosure when the SUPL AGPS location is successful.

Preferably in the embodiment, in the 3GPP network the SLP selects an SRI-FOR-SM signalling to inquire the routing information of the SET from the HLR, and selects the MT-FORWARD-SHORT-MESSAGE (MT Forward SM) signalling to carry the SUPL INIT message; and in the 3GPP2 network it selects an SMSREQ signalling to inquire the routing information of the SET from the HLR, and selects the Short-Message-Deliver-Point-to-Point (SMDPP) signalling to carry the SUPL INIT message. For the purpose of simplicity in illustration, the process below is described by only taking the 3GPP network as an example.

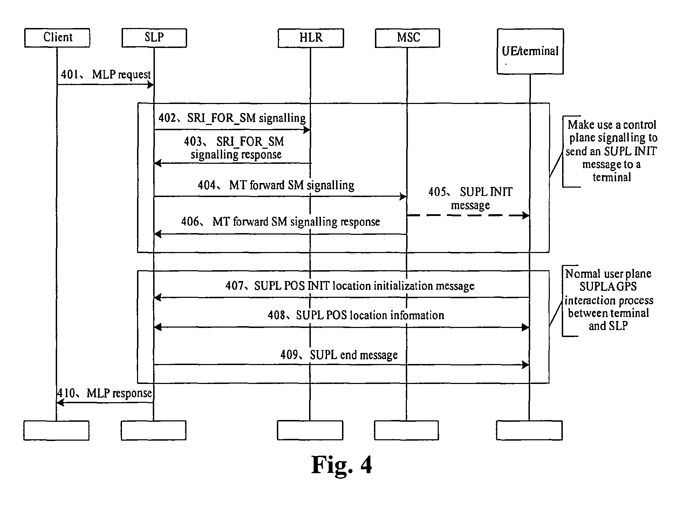

Fig. 4 shows a flowchart of successful SUPL AGPS location. As shown in the Fig. 4, the successful SUPL AGPS location mainly comprises the following steps (Step 401-Step 410).

Step 401, the LCS Client sends an MLP request to the SLP to request to perform the SUPL AGPS location for the SET to be located;

Step 402, the SLP sends the SRI-FOR-SM signalling to the HLR to inquire the routing information and current state of the SET to be located;

Step 403, in the response message of the SRI-FOR-SM signalling, the HLR returns a normal current state of the SET to be located, and returns the VLR or MSC information where the SET to be located currently exists, and International Mobile Subscriber Identity (IMSI) information and the like.

Step 404, the SLP sends the MT Forward SM signalling to the VLR or MSC where the SET to be located currently exists; and the signalling carries the SUPL INIT code stream.

Step 405, the MSC delivers the SUPL INIT message carried in the MT Forward SM signalling to the SET to be located, activates the SET to be located to establish a connection with the SLP and starts the SUPL AGPS location process.

Step 406, the MSC returns the response message of the MT Forward SM signalling; and this Step and Step 405 are not in any specific time sequence.

Step 407, after receiving the SUPL INIT message, the SET to be located allows the location, establishes a link with the SLP and sends a location initialization message (i.e., SUPL POS INIT message).

In this step, if the SET to be located does not allow the location, an SUPL END message is sent to the SLP to end the process.

Step 408, the SET to be located and the SLP perform the user plane based message interaction, that is to say, the interaction of the SUPL POS; and the SLP in the process obtains the auxiliary information and finish the location process of the SET.

Step 409, the location is ended, and the SLP sends a location ending message (SUPL END) to the SET so as to release the resource and end the location process.

Step 410, the SLP responds to the MLP request and sends the obtained location information of the SET to be located to the LCS Client.

### Embodiment 3

The embodiment describes a process of a location method according to this disclosure in a case that the SUPL is failed and the control plane is used.

Preferably in the embodiment, in the 3GPP network the SLP selects to send the SRI-FOR-SM signalling to inquire the routing information of the SET and selects the MT Forward SM signalling to carry the SUPL INIT message; and in the 3GPP2 network it selects the SMSREQ signalling to inquire the routing information of the SET from the HLR and selects the SMDPP signalling to carry the SUPL INIT message. For the purpose of simplicity in illustration, the process below is described by only taking the 3GPP network as an example.

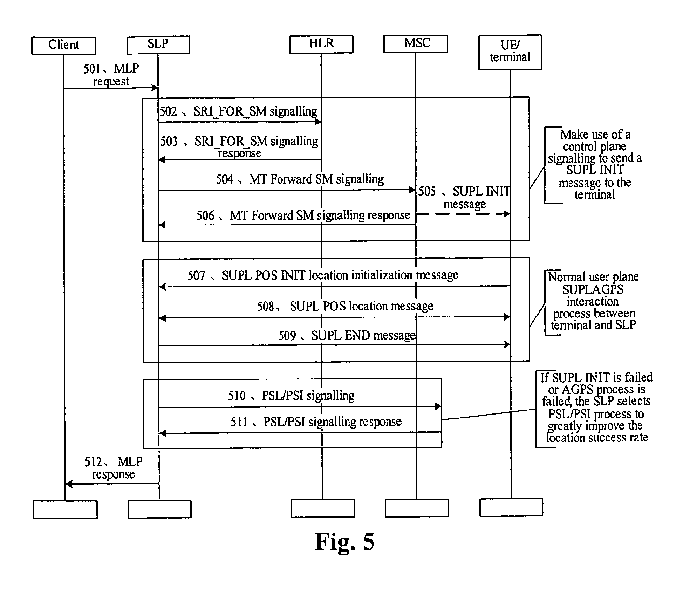

Fig. 5 shows a flowchart of the embodiment in the 3GPP network. As shown in the Fig. 5, the process for using the control plane to locate the SET to be located when the SUPL is failed mainly comprises the following steps (Step 501-Step 512).

Step 501, the LCS Client sends an MLP request to the SLP to request to perform the SUPL AGPS location for the SET to be located.

Step 502, the SLP sends the SRI-FOR-SM signalling to the HLR to inquire the routing information and the current state of the SET to be located.

Step 503, the HLR returns the response message of the SRI-FOR-SM to the SLP; in the response message, the HLR returns a normal current state of the SET to be located, and returns the VLR or MSC information where the SET to be located currently exists, the IMSI information and the like.

Step 504, the SLP sends the MT Forward SM signalling to the VLR or MSC where the SET to be located currently exists; the signalling carries the SUPL INIT code stream; and if the sending is failed, Step 510 is carried out.

Step 505, the MSC delivers the SUPL INIT message carried in the MT Forward SM signalling to the SET, activates the SET to be located to establish a connection with the SLP and starts the SUPL AGPS location process.

Step 506, the MSC returns the response message of the MT Forward SM signalling; and this Step and Step 505 are not in any specific time sequence.

Step 507, after receiving the SUPL INIT message, the SET to be located allows the location, establishes a link with the SLP and sends an SUPL POS INIT message.

In this step, the SET may be failed in establishing a link with the SLP. The specific reason includes, but not limited to: the SET does not support the SUPL, the SET cannot make any response to the SUPL INIT message, overtime in the SET establishing the link and the like.

Step 508, the SET to be located interacts with the SLP through the SUPL POS signalling and carries out the AGPS location for the SET to be located. In this process, the SLP obtains the auxiliary information of the SET and performs the AGPS calculation according to the obtained auxiliary information.

In this step, the SET and the SLP may be failed in carrying out the AGPS location; and the specific reason includes, but not limited to: overtime SET connection, abnormal GPS reference data, failed AGPS calculation and the like.

Step 509, the location is ended, and the SLP sends an SUPL END message to the SET to be located to indicate the ending of the location and release the resource. If the SET processes wrongly or refuses the location in the SUPL location process, it can initiate the SUPL END message actively to end the location process and release the resource.

Step 510, if sending the SUPL INIT message is failed (Step 504-Step 506) or the AGPS location is failed (Step 507-Step 509), the SLP can select to send the PSL signalling to the MSC to carry out the SMLC location or the CELL ID location, or can select to send the PSI signalling to carry out the CELL ID location.

Step 511, the MSC returns the PSL signalling response or the PSI signalling response, wherein the signalling response carries the location information or the CELL ID information of the SET to be located.

Specifically, if the information carried in the signalling response is the CELL ID information, the location information corresponding to the CELL ID information is obtained by inquiring a base station database at the SLP side. And the location information is the location information of the SET to be located.

Step 512, the SLP responses the MLP request and sends the location information of the SET to be located to the LCS Client.

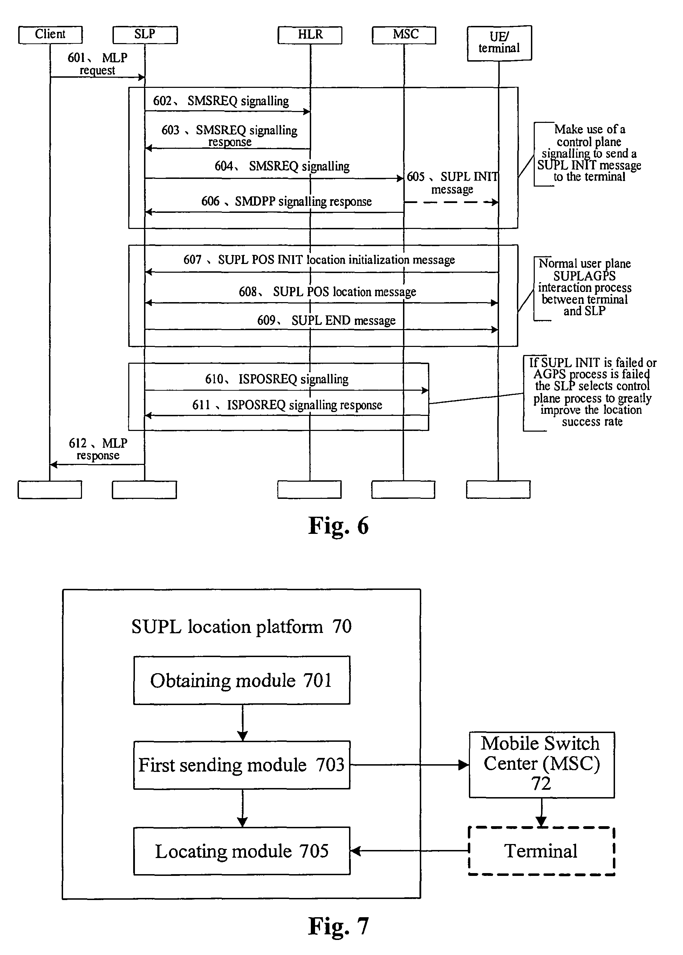

Fig. 6 shows a flowchart of the embodiment in the 3GPP2 network. As shown in the Fig. 6, the process for using the control plane to locate the SET to be located when the SUPL is failed mainly comprises the following steps (Step 601-Step 612).

Step 601, the LCS Client sends an MLP request to the SLP to request to perform the SUPL AGPS location for the SET to be located.

Step 602, the SLP sends the SMSREQ signalling message to the HLR to inquire the routing information and the current state of the SET to be located.

Step 603, the HLR returns a response message of the SMSREQ to the SLP. In the response message, the HLR returns a normal current state of the SET to be located, and returns the VLR or MSC information where the SET to be located currently exists, the IMSI information and the like.

Step 604, the SLP sends the SMDPP signalling to the VLR or MSC where the SET to be located currently exists. The signalling carries the SUPL INIT code stream; and if the sending is failed, the Step 610 is carried out.

Step 605, the MSC delivers the SUPL INIT message carried in the SMDPP signalling to the SET, activates the SET to be located to establish a connection with the SLP and starts the SUPL AGPS location process.

Step 606, the MSC returns the response message of the SMDPP signalling; and this Step and Step 605 are not in any specific time sequence.

Step 607, after receiving the SUPL INIT message, the SET to be located allows the location, establishes a link with the SLP and sends an SUPL POS INIT message.

In this step, the SET may be failed in establishing a link with the SLP; and the specific reason includes, but not limited to: the SET does not support the SUPL; the SET cannot make any response to the SUPL INIT message, overtime in the SET establishing the link and the like.

Step 608, the SET to be located interacts with the SLP through the SUPL POS signalling and carries out the AGPS location for the SET to be located. In this process, the SLP obtains the auxiliary information of the SET and performs the AGPS calculation according to the obtained auxiliary information.

In this step, the SET and the SLP may be failed in carrying out the AGPS location; and the specific reason includes, but not limited to: overtime SET connection, abnormal GPS reference data, failed AGPS calculation and the like.

Step 609, the location is ended, and the SLP sends an SUPL END to the SET to be located to indicate the ending of the location and release the resource. If the SET processes wrongly or refuses the location in the SUPL location process, it can initiate the SUPL END message actively to end the location process and release the resource.

Step 610, if sending the SUPL INIT message is failed (Step 604-Step 606) or the AGPS location is failed (Step 607-Step 609), the SLP can select to send the ISPOSREQ signalling to the MSC to carry out the AFLT location, the EFLT location or the CELL ID location.

Step 611, the MSC returns the ISPOSREQ signalling response, wherein the signalling response carries the PSMM and code chip time delay information, or CELL ID information of the SET to be located. Specifically, if the information carried in the signalling response is the PSMM and code chip time delay information, the SLP obtains the location result through trigonometric calculation. If the information carried in the signalling response is the CELL ID information, the location information corresponding to the CELL ID information is obtained by inquiring the base station database at the SLP side. The location information is the location information of the SET to be located.

Step 612, the SLP responses the MLP request and sends the location information of the SET to be located to the LCS Client.

According to an embodiment of this disclosure, a location system is also provided.

Fig. 7 shows a structural diagram of the location system according to an embodiment of this disclosure. As shown in the Fig. 7, the location system provided by the embodiment of this disclosure may include a SUPL location platform 70 and an MSC 72.

In the above, the SUPL location platform 70 may include an obtaining module 701, a first sending module 703 and a locating module 705, wherein the obtaining module 701 is configured to obtain routing information of the SET to be located. Specifically, the obtaining module 701 can obtain the routing information of the SET when a location request, which is sent from the client and is for locating the SET to be located, is received. Specifically, the routing information of the SET can be obtained by sending an inquiry signalling to the HLR or HSS to which the SET to be located belongs. The first sending module 703 is configured to send a signalling carrying the SUPL initial location message to the MSC 73 to which the SET currently belongs according to the routing information. And the locating module 705 is configured to perform auxiliary GPS location on the SET to be located and obtain the location information of the SET to be located.

Preferably, in the embodiment of this disclosure, the obtaining module 701 is further configured to obtain the current state of the SET to be located. When the current state of the SET to be located obtained by the obtaining module 701 indicates that the SET is currently in the normal state, the obtaining module 701 triggers the first sending module 703. Otherwise, it determines to end the location process and does not trigger the first sending module 703.

The MSC 72 is configured to send the SUPL INIT message to the SET based on the received signalling carrying the SUPL initial location message, so as to activate the SET to be located and establish a connection with the SUPL location platform 70.

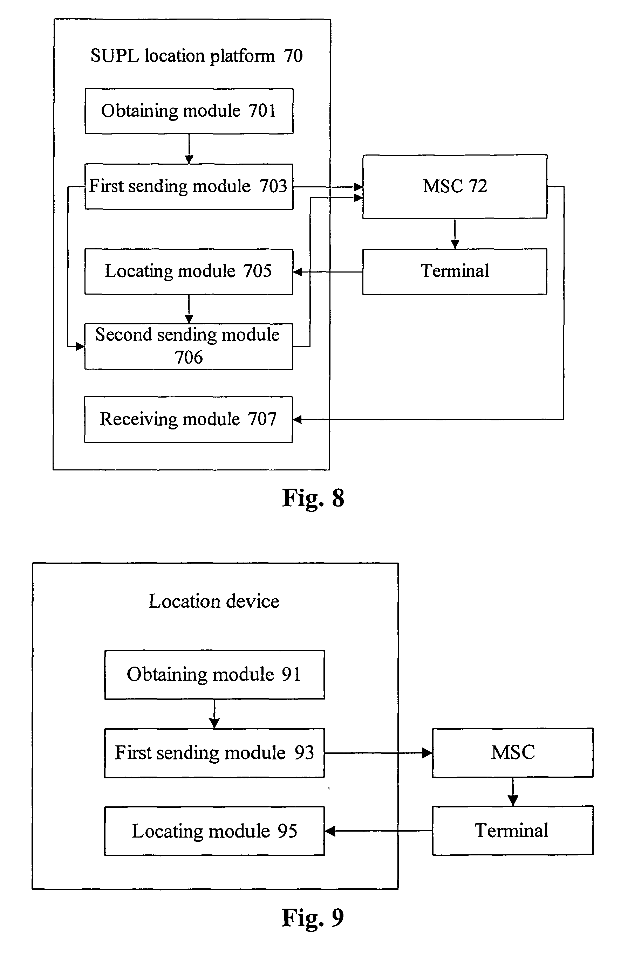

Fig. 8 shows a structural diagram of a location system according to a preferred embodiment of this disclosure. And as shown in the Fig. 8, the SUPL location platform 70 in the location system provided by the embodiment of this disclosure may further include a second sending module 706 and a receiving module 707. In the above, the second sending module 706 is configured to send another signalling to the MSC 72 when sending the signalling carrying the SUPL initial location message is failed, the SET to be located is failed in establishing a connection with the SUPL location platform 70, or the positioning module 705 and the SET to be located are failed in performing the auxiliary GPS location, wherein the another signalling comprises a PSL signalling or a PSI signalling. The receiving module 707 is configured to receive the response message of another signalling returned from the MSC 72, wherein the response message carries the location information of the SET or the information of the cell where the SET exists.

Preferably, the first sending module or the second sending module of the SUPL location platform 70 is further configured to return location information of the SET to be located to the client.

According to an embodiment of this disclosure, a location device is further provided.

Fig. 9 shows a structural diagram of the location device according to an embodiment of this disclosure. And as shown in the Fig. 9, the location device provided by the embodiment of this disclosure comprises: an obtaining module 91, a first sending module 93 and a locating module 95. In the above, the obtaining module 91 is configured to obtain routing information of the SET to be located. Specifically, the obtaining module 91 can obtain the routing information of the SET to be located when the location request sent from the client is received. And the obtaining module 91 can obtain the routing information of the SET by sending an inquiry command to the HLR or HSS of the SET to be located. The first sending module 93 is configured to send a signalling carrying the SUPL initial location message to the MSC to which the SET currently belongs according to the routing information. And the locating module 95 is configured to perform auxiliary GPS location on the SET to be located and obtain the location information of the SET to be located.

Preferably, in the embodiment of this disclosure, the obtaining module 91 can further be configured to obtain the current state of the SET to be located. When the current state of the SET to be located obtained by the obtaining module 91 indicates that the SET is currently in the normal state, the obtaining module 91 triggers the first sending module 93. Otherwise, it determines to end the location process and does not trigger the first sending module 93.

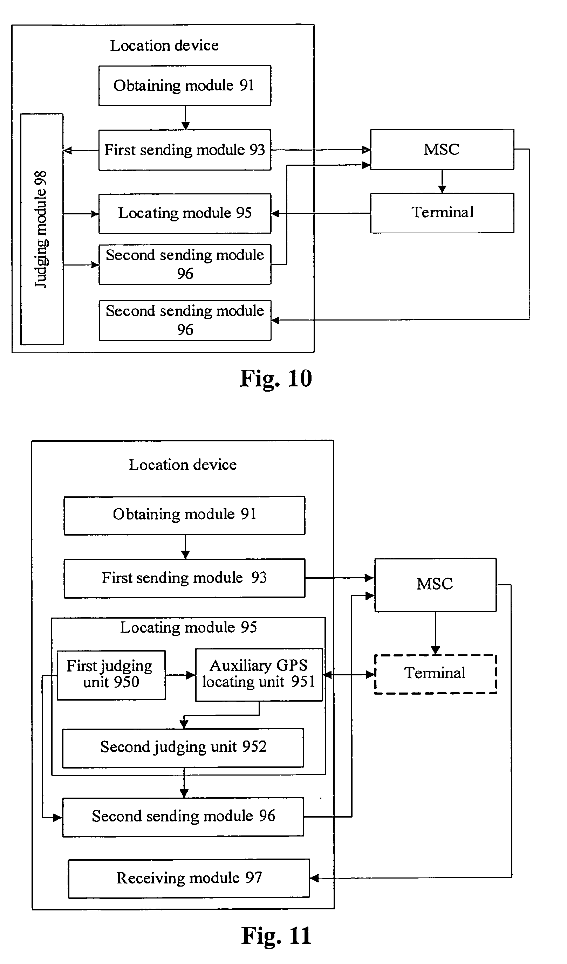

Preferably, as shown in the Fig. 10, the location device may further include a second sending module 96 and a receiving module 97. In the above, the second sending module 96 is configured to send another signalling to the MSC to which the SET belongs, wherein the another signalling comprises a PSL signalling or a PSI signalling. The receiving module 97 is configured to receive the response message of the another signalling returned from the MSC, wherein the response message carries the location information of the SET or the information of the cell where the SET exists.

Preferably, as shown in the Fig. 10, the location module may also include a judging module 98, which is configured to judge whether sending the signalling carrying the SUPL INIT message is successful, and if yes, triggering the locating module 95, otherwise, triggering the second sending module 96.

Preferably, as shown in the Fig. 11, the locating module 95 may include a first judging unit 950, an auxiliary GPS locating unit 951 and a second judging unit 952. In the above, the first judging unit 950 is configured to judge whether the SET is successful in establishing a connection with the location platform, and if yes, triggering the auxiliary GPS locating unit 951, otherwise, triggering the second sending module 96. The auxiliary GPS locating unit 951 is configured to perform the message interaction based on the user plane with the SET and perform the auxiliary GPS location on the SET, so as to obtain the location information of the SET. The second judging unit 952 is configured to judge whether the auxiliary GPS locating unit 951 is failed in performing the auxiliary GPS location, and if yes, triggering the second sending module 96.

Preferably, the first sending module 93 or the second sending module 96 is further configured to return the location information of the SET to be located to the client.

In the specific application, a control plane signalling receiving and sending unit can be integrated in the SLP. The control plane signalling receiving and sending unit is configured to realize the function provided by the location device.

In conclusion, the technical solutions provided by the embodiments of this disclosure inquire the current state of the SET. The SLP can directly end the location process rather than passively wait for the overtime SET connection when the SET is currently in the abnormal state so as to avoid the meaningless wait of the SLP. Furthermore, in the embodiments of this disclosure, the advantage of in time sending of the signaling on the control plane can be realized by sending the signalling, and the SUPL INIT message to the MSC. The problem of delayed sending of the SUPL INIT message is avoided and the dependence of the AGPS is reduced. In addition, in the embodiments of this disclosure, if the AGPS is failed, the PSUPSI message can be sent to the MSC and the location of the control plane can be selected so that the location service capability of the SLP is improved and the competitiveness of the operator is enhanced.

Obviously, the technicians skilled in the art should understand that each module or each step of this disclosure can be realized by a universal calculation device. The modules can be integrated to a single calculation device or distributed in a network which is composed of multiple calculation devices. Optionally, the modules and steps can be realized by executable program codes of the calculation device. As a result, the steps can be stored in a storage device to be performed by the calculation device, or the modules can be respectively made into each integral circuit module or a planarity of modules or steps can be made into single integrated circuit modules for the implementation. Thus, this disclosure is not limited to any specific combination of hardware and software.

The above is only the preferred embodiments of this disclosure, and is not intended to limit this disclosure. For the technicians skilled in the art, this disclosure can have various modifications and changes. Any modifications, equivalent replacements, improvements and the like within the spirit and principle of this disclosure shall fall within the protection scope of this disclosure.

## Claims

1. A location method, **characterized by** comprising:
for a location type sent initially from a network, before sending a Secure User Plane Location (SUPL) initial location message, a location platform obtaining routing information of a SUPL Enabled Terminal (SET) to be located; and
the location platform sending, according to the routing information, a signalling carrying the SUPL initial location message to a Mobile Switch Center (MSC) to which the SET currently belongs; and the MSC sending the SUPL initial location message to the SET.

2. The method according to claim 1, **characterized in that** before the location platform sending the signalling carrying the SUPL initial location message to the MSC, the method further comprises:
the location platform obtaining state information for indicating a current state of the SET, wherein the current state of the SET comprises one of: normal, power-off, out of service, and roaming out of service area.

3. The method according to claim 2, **characterized in that** before the location platform sending the signalling carrying the SUPL initial location message to the MSC, the method further comprises:
the location platform determining that the SET is currently in normal state according to the obtained state information.

4. The method according to claim 2, **characterized in that** if the location platform determines that the SET is currently in abnormal state according to the obtained state information, the method further comprises:
the location platform forbidding sending the signalling to the MSC, ending the location process of the SET, and returning a message for indicating location failure to a client.

5. The method according to claim 1, **characterized in that** after the MSC sending the SUPL initial location message to the SET, the method further comprises:
the SET establishing a connection with the location platform; if the connection establishment is successful, the location platform interacting with the SET to perform location and calculation of auxiliary GPS; and if the location and calculation of the auxiliary GPS is successful, the location platform obtaining location information of the SET; and
if the SET is failed in establishing the connection with the location platform or failed in performing the location and calculation of the auxiliary GPS, the location platform sending another signalling to the MSC, receiving a response message returned from the MSC, and obtaining the location information of the SET according to the response message, wherein the another signalling comprises a ProvideSubscriberLocation (PSL) signalling or a ProvideSubscriberInformation (PSI) signalling.

6. The method according to claim 1, **characterized in that** if sending the signalling carrying the SUPL initial location message is failed, the method further comprises:
the location platform sending another signalling to the MSC, wherein the another signalling comprises: a PSL signalling or a PSI signalling; and
the location platform receiving a response message returned from the MSC, and obtaining the location information of the SET according to the response message.

7. A location system, **characterized by** comprising a SUPL location platform (SLP) and an MSC, wherein
the SLP comprises:
an obtaining module, configured to obtain routing information of a SET to be located;
a first sending module, configured to send a signalling carrying a SUPL initial location message to a MSC to which the SET currently belongs according to the routing information; and
a locating module, configured to perform auxiliary GPS location on the SET and obtain location information of the SET; and
the MSC, configured to send the SUPL initial location message to the SET according to the received signalling carrying the SUPL initial location message, so as to activate the SET to establish a connection with the SLP.

8. The system according to claim 7, **characterized in that** the SLP further comprises:
a second sending module, configured to send another signalling to the MSC when sending the signalling carrying with the SUPL initial location message is failed, the SET is failed in establishing the connection with the SLP, or the locating module and the SET are failed in performing the auxiliary GPS location, wherein the another signalling comprises a PSL signalling or a PSI signalling; and
a receiving module, configured to receive a response message returned from the MSC, wherein the response message carries the location information of the SET or information of a cell where the SET exists.

9. A location device, **characterized by** comprising:
an obtaining module, configured to obtain routing information of a SET to be located;
a first sending module, configured to send a signalling carrying the SUPL initial location message to the MSC to which the SET currently belongs according to the routing information; and
a locating module, configured to perform auxiliary GPS location on the SET and obtain location information of the SET.

10. The device according to claim 9, **characterized by** further comprising:
a second sending module, configured to send another signalling to the MSC, wherein the another signalling comprises: a PSL signalling, or a PSI signalling; and
a receiving module, configured to receive a response message of the another signalling returned from the MSC, wherein the response message carries the location information of the SET or information of a cell where the SET exists.

11. The device according to claim 10, **characterized in that** the locating module comprises:
a first judging unit, configured to judge whether the SET is successful in establishing a connection with a location platform; and if yes, triggering an auxiliary GPS locating unit and otherwise, triggering the second sending module;
the auxiliary GPS locating unit, configured to perform message interaction based on user plane with the SET, and performing the auxiliary GPS location on the SET so as to obtain the location information of the SET; and
a second judging unit, configured to judge whether the auxiliary GPS locating unit is failed in performing the auxiliary GPS location, and if yes, triggering the second sending module.

12. The device according to claim 10, **characterized by** further comprising:
a judging module, configured to judge whether the signalling carrying the SUPL initial location message is sent successfully; and if yes, triggering the locating module, otherwise, triggering the second sending module.
